# EUROPÄISCHE PATENTANMELDUNG

(11) **EP 0 689 331 A2**
(43) Veröffentlichungstag der Anmeldung: **27.12.1995**
(21) Anmeldenummer: 95108755.0
(22) Anmeldetag: 07.06.1995
(51) Int. Cl.: H04M 1/72

(54) **Anschalteinrichtung zur Vorsorgung von zusätzlichen Diensten in Fernsprechendgeräten**

(30) Priorität: 16.06.1994 DE 4421101
(71) Anmelder: SIEMENS AKTIENGESELLSCHAFT, D-80333 München (DE)
(72) Erfinder: Honsel, Sigolf Dipl.-Ing., D-81369 München (DE); Niessner, Heinrich Dipl.-Ing., D-81547 München (DE)

(57) **Zusammenfassung**

Die Erfindung betrifft ein Fernsprechendgerät (T) mit einer Prozessorsteuerung (PS), angeschaltet an einer Telefonleitung (a/b),mit mindestens einer in die Telefonleitung (a/b) eingeschleiften Anschlußbaugruppe (AG), die eine Reihenschaltung aus einer Schaltstufe zur Erkennung des Belegtzustandes und zu Impulswahl (SFA) und einen Trennschalter (TS) aufweist, der in einer ersten Schalterstellung eine Durchschaltung der Telefonleitung (a/b) und in einer zweiten Schalterstellung das Einschleifen einer Anschlußsteckdose (AS) in die Telefonleitung (a/b) bewirkt, wobei die Schaltstufe (SFA) mit der Prozessorsteuerung (PS) verbunden ist, die den Trennschalter (TS) ansteuert.

## Beschreibung

Die Erfindung betrifft ein Fernsprechendgerät, insbesondere ein öffentliches Kartentelefon.

Oftmals wäre es wünschenswert an einem Fernsprechendgerät, beispielsweise einem Telefonapparat, einem Faxgerät, einen Personalcomputer oder Laptop mit Faxkarte, ein Modem oder ähnliche Zusatzgeräte anzuschließen.

Der Erfindung liegt die Aufgabe zugrunde ein Fernsprechendgerät anzugeben, das eine solche Anschaltmöglichkeit für zusätzliche Dienste aufweist.

Diese Aufgabe wird erfindungsgemäß durch die im Patentanspruch angegebenen Merkmale gelöst.

Durch die Erfindung hat beispielsweise der Benutzer eines öffentlichen Kartentelefons Zugang zur a/b-Schnittstelle, an der er eines der eingangs genannten Zusatzgeräte anschließen kann. So kann er beispielsweise über das Kartentelefon ein Fax absenden oder Daten über ein Modem austauschen.

Im folgenden wird die Erfindung anhand eines in der Zeichnung dargestellten Ausführungsbeispieles erläutert.

Dabei zeigen
- Fig. 1: ein Prinzipschaltbild der Erfindung und
- Fig. 2: ein Blockschaltbild des erfindungsgemäßen Telefonapparates.

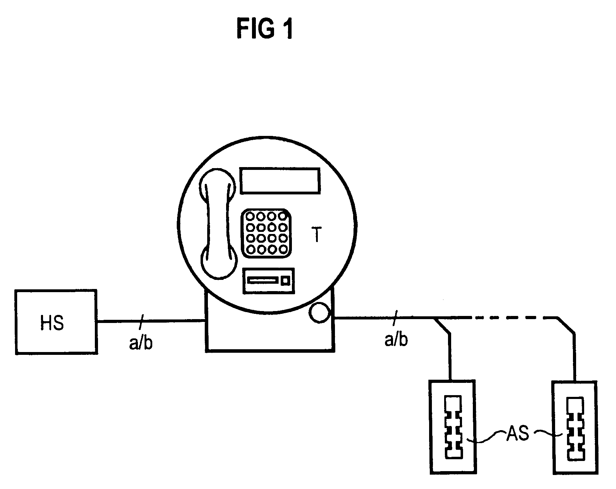

In der Fig. 1 ist als Beispiel für ein Fernsprechendgerät ein Telefonapparat T dargestellt, bei dem es sich beispielsweise um ein öffentliches Kartentelefon handeln kann. Dieser Telefonapparat T ist über eine zweiadrige Telefonleitung a/b mit einem Hintergrundsystem HS verbunden. Auf der Telefonleitung a/b werden dabei folgende Signale übertragen: der Ruf, die Teilnehmerwahl im Impulswahlverfahren oder im Multifrequenzwahlverfahren, die Sprachsignale der beiden Teilnehmer, oder die Modem-Daten. Diese Modem-Daten werden zwischen dem Hintergrundsystem HS und dem Telefonapparat T ausgetauscht und dienen zum Betrieb des Kartentelefons.

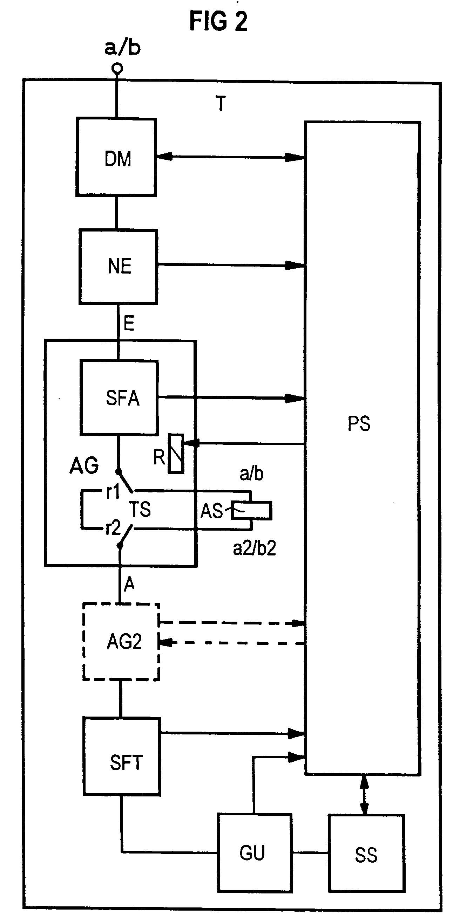

Erfindungsgemäß weist der Telefonapparat T eine oder mehrere Anschlußsteckdosen AS auf. Es handelt sich hier beispielsweise um sogenannte TAE-Dosen, an die handelsübliche Telefon-Endgeräte angeschlossen werden können, die üblicherweise an einer Telefonleitung a/b angeschaltet werden können. Die Anschlußsteckdosen AS sind dabei mit der Telefonleitung a/b im Telefonapparat T verbunden. Diese Anschaltung wird anschließend anhand von Fig. 2 genauer erläutert.

In Fig. 2 sind die für das Verständnis der Erfindung notwendigen Systeme des Telefonapparates dargestellt. Über eine nicht näher dargestellte Schnittstelle ist die Telefonleitung a/b mit dem Telefonapparat T verbunden.

Im Telefonapparat T ist die Telefonleitung a/b an einem Datenmodem DM angeschaltet über das der Datenaustausch mit dem Hintergrundsystem HS abgewickelt wird. Das Datenmodem DM ist hierzu mit einem den Telefonapparat T steuernden Prozessorsystem PS verbunden.

Dem Datenmodem DM nachgeschaltet ist eine Nummernerkennung NE. Diese Nummernerkennung NE erkennt Wahlsignale nach dem Mehrfrequenzwahlverfahren, decodiert diese Wahlinformation und leitet sie zur Auswertung an das Prozessorsystem PS weiter.

Zwischen dieser Nummernerkennung NE und dem eigentlichen Telefonteil, bestehend aus einem Schleifenstromsensor SFT, einem Gabelumschalter GU und einer Schleifensteuerung SS, sind erfindungsgemäß eine oder mehrere Ahschlußbaugruppen AG, AG2 eingeschaltet. Die Anschlußbaugruppen AG, AG2 und die anderen aufgezählten Baugruppen sind dabei in Reihe geschaltet.

Die Anschlußbaugruppe AG weist einen Eingang E auf, der mit der Nummernerkennung RE verbunden ist und sie weist einen Ausgang A auf, der entweder mit einer weiteren Anschlußbaugruppe AG2 oder mit dem Schleifenstromsensor SFT verbunden ist.

Der Schleifenstromsensor SFT des Telefonapparates T dient zur Überwachung des Belegungszustandes. Hierzu wird der Schleifenstrom überwacht. Übersteigt dieser einen Schwellwert, wird an das Prozessorsystem PS gemeldet, daß Strom fließt. Unterhalb dieses Wertes wird gemeldet, daß kein Strom fließt.

Der Schleifenstromsensor SFT ist mit dem Gabelumschalter GU verbunden. Der Gabelumschalter GU dient zur Anschaltung bzw. Abtrennung der nachgeschalteten Schleifensteuerung SS. Die Schleifensteuerung SS dient zur Nummernwahl und enthält die Hör-Sprechschaltung. Der Gabelumschalter GU und die Schleifensteuerung SS sind ebenfalls jeweils mit dem Prozessorsystem PS verbunden.

Zwischen den Eingang E und den Ausgang A der Anschlußbaugruppe AG sind ein Schleifenstromsensor SFA und ein Trennschalter TS in Reihe geschaltet. Der Trennschalter TS dient zur An- bzw. Abschaltung der Anschlußsteckdose AS. Hierzu weist der Trennschalter TS zwei Umschaltkontakte r1, r2 auf, die in einer ersten Schalterstellung miteinander, und die in einer zweiten Schalterstellung über jeweils zwei zweiadrige Leitungen a/b und a2/b2 mit der Anschlußsteckdose AS verbunden sind.

Die (zweiadrige) Telefonleitung a/b führt vom Schleifenstromsensor SFA über die Anschlußsteckdose AS zum Ausgang A. Die Anschlußsteckdose AS kann durch den Trennschalter TS abgetrennt werden, so daß die Telefonleitung a/b direkt vom Schleifenstromsensor SFA zum Ausgang A führt.

Der Schleifenstromsensor SFA ist mit dem Prozessorsystem PS verbunden. Zur Ansteuerung des Trennschalters TS, d.h. der Umschaltkontakte r1, r2 ist eine mit dem Prozessorsystem PS verbundene Relaiswicklung R vorgesehen.

Der Schleifenstromsensor SFA dient zur Überwachung des Schleifenstromes in der Anschlußsteckdose AS, wenn diese Anschlußsteckdose AS in die Telefonleitung a/b über den Trennschalter TS eingeschleift ist. Als Schleifenstromsensor SFA können spezielle Relais mit niederohmigen Wicklungen verwendet werden.

Die nur als Block dargestellte Anschlußbaugruppe AG2 ist genauso ausgebildet wie die Anschlußbaugruppe AG.

Die Erkennung des Belegungszustandes des an der Anschlußsteckdose AS angeschalteten Dienstes erfolgt über den Schleifenstromsensor SFA bzw. den in der Anschlußbaugruppe AG2 vorgesehenen Schleifenstromsensor.

Durch den Trennschalter TS können die zusätzlich an der Anschlußsteckdose AS angeschalteten Dienste abhängig von bestimmten Kriterien an- bzw. weggeschaltet werden. Solche Kriterien sind beispielsweise das Guthaben auf der Telefonkarte, die Zulässigkeit der gerufenen Nummer und Ähnliches.

## Patentansprüche

1. Fernsprechendgerät (T) mit einer Prozessorsteuerung (PS), angeschaltet an einer Telefonleitung (a/b),
mit mindestens einer in die Telefonleitung (a/b) eingeschleiften Anschlußbaugruppe (AG), die eine Reihenschaltung aus einem Schleifenstromsensor (SFA) und einem Trennschalter (TS) aufweist, der in einer ersten Schalterstellung eine Durchschaltung der Telefonleitung (a/b) und in einer zweiten Schalterstellung das Einschleifen einer Anschlußsteckdose (AS) in die Telefonleitung (a/b) bewirkt, wobei die Schaltstufe (SFA) mit der Prozessorsteuerung (PS) verbunden ist, die den Trennschalter (TS) ansteuert.
